# EUROPEAN PATENT SPECIFICATION

(11) **EP 0 575 972 B1**
(45) Date of publication and mention of the grant of the patent: **20.05.1998**
(21) Application number: 93110003.6
(22) Date of filing: 23.06.1993
(51) Int. Cl.: C08G 77/26, C08L 83/08

(54) **Amino-containing organopolysiloxane and method for its preparation**
Aminogruppen-enthaltende Organipolysiloxane und Verfahren zur deren Herstellung
Organopolysiloxanes contenant des groupes ammés et procédé pour leur préparation

(30) Priority: 25.06.1992 JP 191518/92
(43) Date of publication of application: 29.12.1993
(73) Proprietor: Dow Corning Toray Silicone Company, Limited, Tokyo 103 (JP)
(72) Inventor: Okawa, Tadashi, Dow Corning Toray Silicone, Ichihara-shi, Chiba Prefecture (JP); Nakashima, Hisataka, Dow Corning Toray Silicone, Ichihara-shi, Chiba Prefecture (JP)
(74) Representative: Sternagel, Hans-Günther, Dr.

(56) References cited:
- EP-A- 0 327 886
- EP-A- 0 530 718
- GB-A- 1 598 845
- US-A- 3 890 269
- US-A- 5 025 076

## Description

The present invention relates to an amino-containing organopolysiloxane that is a secondary amino-functional organopolysiloxane having silanol or alkenyl groups at both terminals.

Methods for the synthesis of amino-functional organopolysiloxane are already known. For example, Japanese Publication Number Sho 36-8598 [8,598/1961] discloses preparation of amino-functional organopolysiloxanes by equilibration polymerization between aminoalkylmethylpolysiloxane and octamethylcyclotetrasiloxane. Japanese Publication Number Sho 40-1185 [1,185/1965] discloses preparation of amino-functional organopolysiloxanes by a dehydrochlorination reaction between chloroalkylmethylpolysiloxane and organic amine. Finally, Japanese Publication Number Sho 46-28090 [28,090/1971] discloses preparation of amino-functional organopolysiloxanes by condensation between silanol-terminated diorganopolysiloxane and aminoalkylalkoxysilane.

The amino-functional organopolysiloxanes afforded by these methods are widely used for such applications as fiber-treatment agents, cosmetic additives, leather-treatment agents, paint additives, and so forth.

However, the amino-functional organopolysiloxanes considered above do not contain reactive groups other than the amino group. In consequence thereof, they cannot be directly used, for example, as base polymer for low-temperature-curing silicone elastomers whose crosslinking is based on the hydrosilylation reaction, nor can they be used as base polymer for room-temperature-curing silicone elastomers that crosslink by condensation reactions. In addition, the above materials are primary amino-functional organopolysiloxanes and are therefore easily degraded and yellowed by sunlight. Finally, such primary amino-functional organopolysiloxanes cannot be used in low-temperature-curing silicone elastomers that crosslinks by hydrosilylation because they inhibit such reactions.

The problem solved by the present invention is to provide an amino-containing organopolysiloxane that can be crosslinked by a condensation or hydrosilylation reaction. Further, despite its amino group content, the amino-containing organopolysiloxane of this invention resists yellowing even when exposed to sunlight. Finally the present invention provides a method for the preparation of this amino-containing organopolysiloxane.

The present invention relates to organopolysiloxane with the following general formula 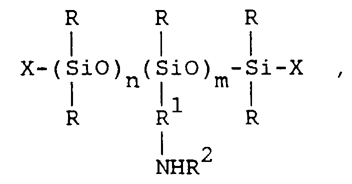 where each R is independently selected from monovalent hydrocarbon groups, R¹ is a divalent organic group having at least 2 carbon atoms, each R² is independently selected from monovalent hydrocarbon groups that are free of aliphatic unsaturation, X is selected from hydroxyl or alkenyl groups, and n and m are both integers with values of at least 1.

This invention also relates to a method for the preparation of the amino-containing organopolysiloxane with the general formula 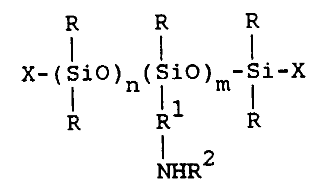 wherein said method is characterized by the execution of an equilibration polymerization among
(A) a diorganopolysiloxane comprised of units with the following formula 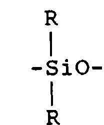 and
(B) a diorganopolysiloxane comprised of units with the following formula 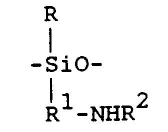 and optionally
(C) an endblocking agent that contains hydroxyl or alkenyl groups; in the presence of
(D) a basic catalyst.

The amino-containing organopolysiloxane of the present invention has the following general formula: 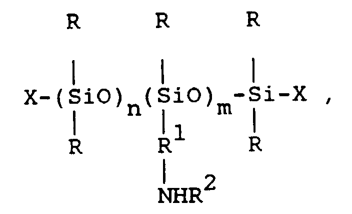 R in the formula comprises one or more selections from monovalent hydrocarbon groups. R may be exemplified by alkyl groups such as methyl, ethyl, propyl, butyl, pentyl, and hexyl; alkenyl groups such as vinyl, allyl, butenyl, hexenyl, and isopropenyl; aryl groups such as phenyl, tolyl, and xylyl; and aralkyl groups such as benzyl, and phenylethyl. R is preferably methyl or phenyl based on such considerations as ease of synthesis, acquisition, economics, and so forth.

R¹ is a divalent organic group having at least two carbons, and may be exemplified by ethylene, propylene, butylene, pentylene, and hexylene or by alkyleneoxyalkylene groups such as ethyleneoxypropylene, or ethyleneoxybutylene. Based on ease of synthesis and economics, R¹ is preferably an alkylene group, and propylene is particularly preferred.

R² comprises one or more selections from monovalent hydrocarbon groups that are free of aliphatic unsaturation. R² may be exemplified by alkyl groups such as methyl, ethyl, propyl, butyl, pentyl, and hexyl; aryl groups such as phenyl, tolyl, and xylyl; and aralkyl groups such as benzyl, or phenylethyl. R² is preferably propyl, butyl, or pentyl based on such factors as ease of synthesis, acquisition, economics, and so forth.

Both n and m are integers with values of at least 1, and no specific limitations attach to their upper limits or to the ratio between n and m. However, the proportion of chain form is diminished and the proportion of cyclics is increased when equilibration is carried out at large values for the ratio m/(n + m), and for this reason the value of the ratio m/(n + m) preferably does not exceed 0.2.

The group X is a hydroxyl group or an alkenyl group. This alkenyl group is exemplified by vinyl, allyl, butenyl, hexenyl, and isopropenyl.

The method for preparation of amino-containing organopolysiloxane in accordance with the present invention is explained in greater detail below.

The component (A) used in the method of the present invention consists of diorganopolysiloxane comprised of units with the formula 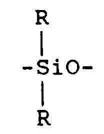 in which R is defined as above. This diorganopolysiloxane may be exemplified by the following organopolysiloxane cyclics: hexamethylcyclotrisiloxane, octamethylcyclotetrasiloxane, 1,3,5-trimethyl-1,3,5-triphenylcyclotrisiloxane, 1,3,5,7-tetramethyl-1,3,5,7-tetraphenylcyclotetrasiloxane, hexaphenylcyclotrisiloxane, octaphenylcyclotetrasiloxane, 1,3,5-trimethyl-1,3,5-trivinylcyclotrisiloxane, 1,3,5,7-tetramethyl-1,3,5,7-tetravinylcyclotetrasiloxane, hexavinylcyclotrisiloxane, octavinylcyclotetrasiloxane, and others.

In addition, a chain-form diorganopolysiloxane can also be used as component (A) of the present invention. This chain-form diorganopolysiloxane (A) may be exemplified by: dimethylalkenylsiloxy-terminated dimethylpolysiloxanes, dimethylalkenylsiloxy-terminated methylphenylpolysiloxanes, dimethylalkenylsiloxy-terminated dimethylpolysiloxane-diphenylpolysiloxane copolymers, dimethylalkenylsiloxy-terminated dimethylpolysiloxane-diphenylpolysiloxane-methylphenylpolysiloxane copolymers, hydroxyl-terminated dimethylpolysiloxanes, hydroxyl-terminated methylphenylpolysiloxanes, hydroxyl-terminated dimethylpolysiloxane-diphenylpolysiloxane copolymers, and hydroxyl-terminated dimethylpolysiloxane-diphenylpolysiloxane-methylphenylpolysiloxane copolymers.

In the case of the latter, the molecular weight of the ultimately obtained copolymer can be regulated through the number of moles of terminal functional groups in the diorganopolysiloxane used. In particular, use of the latter makes it possible to dispense with the use of endblocking agent in the equilibration polymerization reaction. The diorganopolysiloxanes described above can be used in freely selected combinations in the preparative method of the present invention depending on the particular purpose.

Component (B) used in the method of the present invention comprises a diorganopolysiloxane comprised of units with the formula 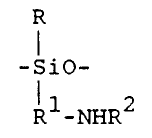 in which R, R¹, and R² are defined as above. This diorganopolysiloxane (B) may be exemplified by cyclic diorganopolysiloxanes such as
1,3,5,7-tetramethyl-1,3,5,7-tetra(tert-butylaminopropyl) cyclotetrasiloxane,
1,3,5,7-tetramethyl-1,3,5,7-tetra(n-butylaminopropyl) cyclotetrasiloxane,
1,3,5,7-tetramethyl-1,3,5,7-tetra(isopropylaminopropyl)-cyclotetrasiloxane,
1,3,5,7-tetramethyl-1,3,5,7-tetra(methylaminopropyl)-cyclotetrasiloxane,
1,3,5,7,9-pentamethyl-1,3,5,7,9-penta(tert-butylaminopropyl)-cyclopentasiloxane,
1,3,5,7,9-pentamethyl-1,3,5,7,9-penta(n-butylaminopropyl)-cyclopentasiloxane,
1,3,5,7,9-pentamethyl-1,3,5,7,9-penta(isopropylaminopropyl)-cyclopentasiloxane, and
1,3,5,7,9-pentamethyl-1,3,5,7,9-penta(methylaminopropyl)-cyclopentasiloxane.

In addition, the hydrolyzate of tert-butylaminopropylmethyl dimethoxysilane, n-butylaminopropylmethyldimethoxysilane, isopropylaminopropylmethyldimethoxysilane, or methylaminopropylmethyldimethoxysilane can also be used as component (B).

Component (C) is used on an optional basis in the method of the present invention. Component (C) is required when neither the diorganopolysiloxane in component (A) nor the diorganopolysiloxane in component (B) contain endblocking component. The endblocking agent under consideration includes water, hydroxyl-terminated diorganooligosiloxane, and dimethylalkenylsiloxy-terminated diorganooligosiloxane. Such oligosiloxane may be exemplified by 1,3-dihydroxy1,1,3,3-tetramethyldisiloxane and 1,3-divinyl- 1,1,3,3-tetramethyldisiloxane.

The basic catalyst, component (D), used in the method of the present invention is an equilibration polymerization catalyst. Component (D) may be exemplified by alkali hydroxides such as lithium hydroxide, sodium hydroxide, potassium hydroxide, cesium hydroxide, and tetramethylammonium hydroxide; alkali silanolates such as lithium silanolate, sodium silanolate, potassium silanolate, cesium silanolate, and tetramethylammonium silanolate; and organometallic compounds such as butyllithium, phenyllithium, methyllithium, sodium naphthalenate, potassium naphthalenate, and cumylpotassium. In order to achieve a state of complete equilibration during the equilibration polymerization, the alkali component in component (D) is preferably potassium, cesium, or tetramethylammonium.

The method of the present invention consists of mixing the above-described components (A) to (D) and effecting polymerization under suitable conditions. Preferred polymerization conditions comprise reacting at 50°C to 200°C for 5 minutes to 50 hours. The polymerization reaction may be run in the absence of solvent or it may be run in the presence of a suitable solvent. The solvent should be an aprotic solvent that is capable of thoroughly dissolving the starting materials and polymer product. Solvents recommended for this purpose include aromatic hydrocarbons such as benzene, toluene, and xylene; aliphatic hydrocarbons such as hexane and heptane; ethers such as tetrahydrofuran and diethyl ether; dimethylformamide; dimethyl sulfoxide; and hexamethylphosphoramide. In addition, excellent effects can often be obtained through the use of combinations of two or more types of solvents. For example, when a low-polarity solvent such as toluene is used, the addition of a highly polar solvent (e.g., dimethylformamide, dimethyl sulfoxide, or hexamethylphosphoramide) is recommended for the purpose of accelerating the reaction.

The polymerization reaction is generally monitored by techniques such as viscometry, gas chromatography, and so forth, and the reaction is stopped by neutralization once it has been confirmed that equilibration has been achieved. When a decomposable catalyst has been used as the polymerization catalyst, for example, tetramethylammonium hydroxide, tetramethylammonium silanolate, and so forth, a neutralization step after completion of the polymerization reaction becomes unnecessary because the catalyst can be decomposed by heating to a suitable temperature.

The desired secondary amino-containing organopolysiloxane of this invention can be recovered by deactivating the catalyst as described above and then by distilling out the low boilers and solvent by heating under reduced pressure.

The amino-containing organopolysiloxane of the present invention as described hereinbefore can be cured in the presence of a suitable crosslinker and catalyst because it contains silanol or alkenyl groups at both molecular chain terminals. Accordingly, it can be used as base polymer for low-temperature-curing silicone elastomers and room-temperature-curing silicone elastomers. Due to the presence of the pendant amino group, silicone elastomer afforded by the crosslinking of the organopolysiloxane of the present invention can be expected to have improved properties, for example, an excellent adhesiveness, and so forth.

So that those skilled in the art can understand and appreciate the invention taught herein, the following examples are presented.

In the examples, "Me" designates the methyl group, "Vi" designates the vinyl group, and "t-Bu" designates the tertiary-butyl group.

### PREPARATION EXAMPLE 1

The following were introduced into a 0.5 L flask equipped with a stirrer, reflux condenser, thermometer, and addition funnel: 180.6 g (1.60 mol) N-tert-butylallylamine and chloroplatinic acid/1,3-divinyltetramethyldisiloxane complex in an amount sufficient to give 10 ppm platinum metal based on N-tert-butylallylamine. After heating to 80°C, 77.0 g (0.32 mol) tetramethyltetracyclosiloxane were dripped in over 2 hours. A check was run by gas chromatography (GLC) after reaction for 3 hours at 80°C to 136°C. 7.5 ppm of the same platinum complex was then added because the mono-, di-, and triadducts by the amine were still present. When another GLC check was run, it was found that this low-molecular-weight material had reacted and had disappeared, and the reaction mixture was then cooled to room temperature. Impurities and unreacted N-tert-butylallylamine were eliminated by vacuum distillation first at 35°C/42 mmHg (5.59 kPa) and then at 200°C/3 mmHg (0.40 kPa). This resulted in the recovery of 155.1 g (yield = 70%) 1,3,5,7-tetramethyl-1,3,5,7-tetra[3-(N-tert-butylamino)propyl]cyclotetrasiloxane.

### EXAMPLE 1

The following were introduced into a stirrer-equipped four-neck flask and heated with stirring at 140°C to 150°C: 171.5 g (577.8 mmol) octamethylcyclotetrasiloxane, 21.1 g (30.5 mmol) of the 1,3,5,7-tetramethyl-1,3,5,7-tetra[3-(N-tert-butylamino)propyl]cyclotetrasiloxane whose synthesis is described in Preparation Example 1, 7.44 g (40 mmol) 1,3-divinyl-1,1,3,3-tetramethyldisiloxane, and 0.03 g (0.2 mmol) cesium hydroxide. Reaction mixture was taken out at regular intervals and the viscosity was measured. The viscosity of the reaction mixture reached an almost constant value at 3 hours, thus confirming that equilibration had been reached. After cooling, the reaction was stopped by the addition of 0.046 g (0.45 mmol) triethylamine and 0.036 g (0.3 mmol) vinyldimethylchlorosilane. Elimination of the salt product by filtration and then vacuum distillation at 200°C/1 mmHg (0.133 kPa) yielded 165.2 g of a colorless transparent polymer. This was determined to be organopolysiloxane with the following average formula based on the results of nuclear magnetic resonance analysis (NMR), infrared spectroscopic analysis (IR), and quantitative analysis of the amino and vinyl groups. 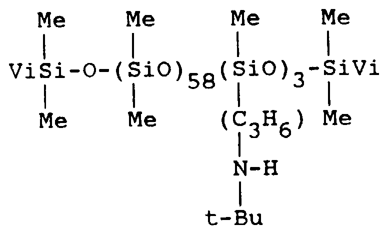
- t-BuNH group weight%:: measured 4.20%, calculated 4.46%
- Vi group weight%:: measured 1.03%, calculated 1.08%
- viscosity (25°C):: 119.0 centistokes (mm²/s)

This polymer was first mixed with trimethylsiloxy-terminated methylhydrogenpolysiloxane (average degree of polymerization = 45) followed by the addition with mixing to homogeneity of sufficient divinyltetramethyldisiloxane/chloroplatinic acid complex to give 10 ppm platinum metal. Heating this mixture for 10 minutes at 110°C afforded a colorless, transparent, and rubbery cured product.

### EXAMPLE 2

The following were introduced into a stirrer-equipped four-neck flask and heated to 130°C: 136.4 g (459.8 mmol) octamethylcyclotetrasiloxane, 16.8 g (24.3 mmol) of the 1,3,5,7-tetramethyl-1,3,5,7-tetra[3-(N-tert-butylamino)propyl]cyclotetrasiloxane whose synthesis is described in Preparation Example 1, 0.02 g (0.13 mmol) cesium hydroxide, and 20 mL toluene. 1.8 g dimethyl sulfoxide was then added, and equilibration was carried out by stirring for 1 hour. The reaction was cooled to 50°C, a mixture of 1.8 g dimethyl sulfoxide and 100 microliters water was added, and the reaction was then stirred at this temperature. Reaction mixture was taken out at regular intervals and its viscosity was measured. An almost constant value was reached at 3 hours, and the polymerization was stopped by the addition of 0.017 g (0.16 mmol) trimethylchlorosilane. Elimination of the salt product by filtration and vacuum distillation of the solvent and low boilers at 165°C/1 mmHg (1.133 kPa) yielded 101.6 g of a transparent polymer. Analysis of this polymer as in Example 1 confirmed it to be organopolysiloxane with the following average formula. 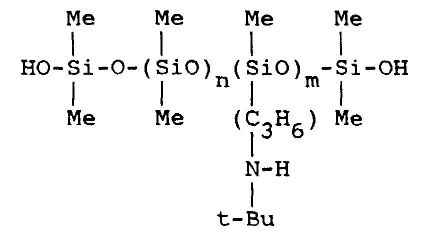
- t-BuNH group weight%:: measured 4.65%, calculated 4.56%
- n/m =: 19/1
- viscosity (25°C):: 23,100 centipoise (mPa.s)

A mixture of 50 g of this polymer, 0.5 g trimethylsiloxy-terminated methylhydrogenpolysiloxane (average degree of polymerization = 45), and 1.5 g dibutyltin dilaurate was prepared. A rubbery cured material was obtained by allowing this mixture to stand at room temperature. This confirmed that both terminals of the polymer prepared in Example 2 carried the hydroxyl group. This rubbery cured product did not yellow even when exposed to sunlight for 1 month.

Because the amino groups in the amino-containing organopolysiloxane of the present invention are secondary amino groups and because this organopolysiloxane carries silanol or alkenyl groups at both terminals, it can be crosslinked by condensation or hydrosilylation and it resists yellowing even upon exposure to sunlight. The preparative method of the present invention is characterized by the ability to prepare the aforesaid amino-containing organopolysiloxane in a highly productive manner.

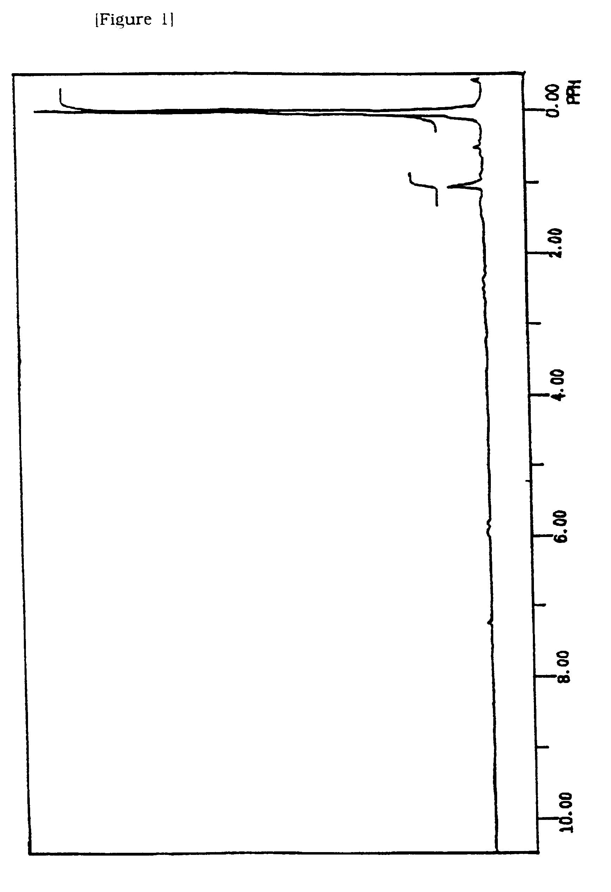

Figure 1: Figure 1 contains the nuclear magnetic resonance spectrogram of the dimethylvinylsiloxy-terminated amino-containing organopolysiloxane prepared in Example 1.

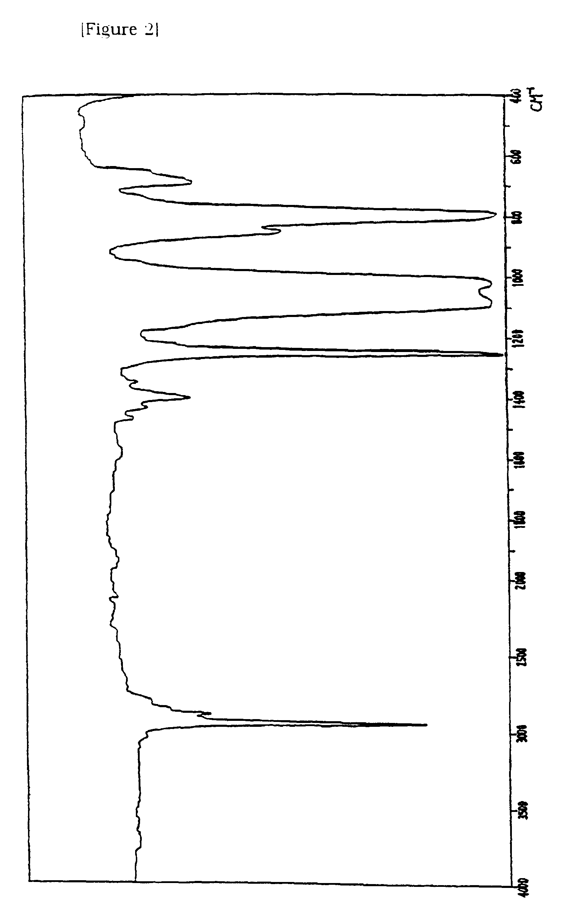

Figure 2: Figure 2 contains the infrared absorption spectrogram of the dimethylvinylsiloxy-terminated amino-containing organopolysiloxane prepared in Example 1.

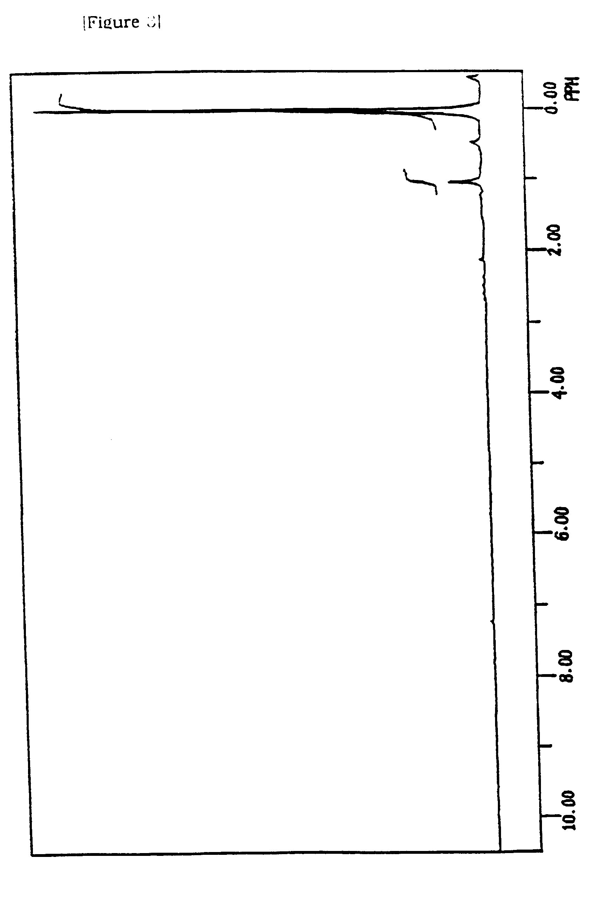

Figure 3: Figure 3 contains the nuclear magnetic resonance spectrogram of the hydroxyl-terminated amino-containing organopolysiloxane prepared in Example 2.

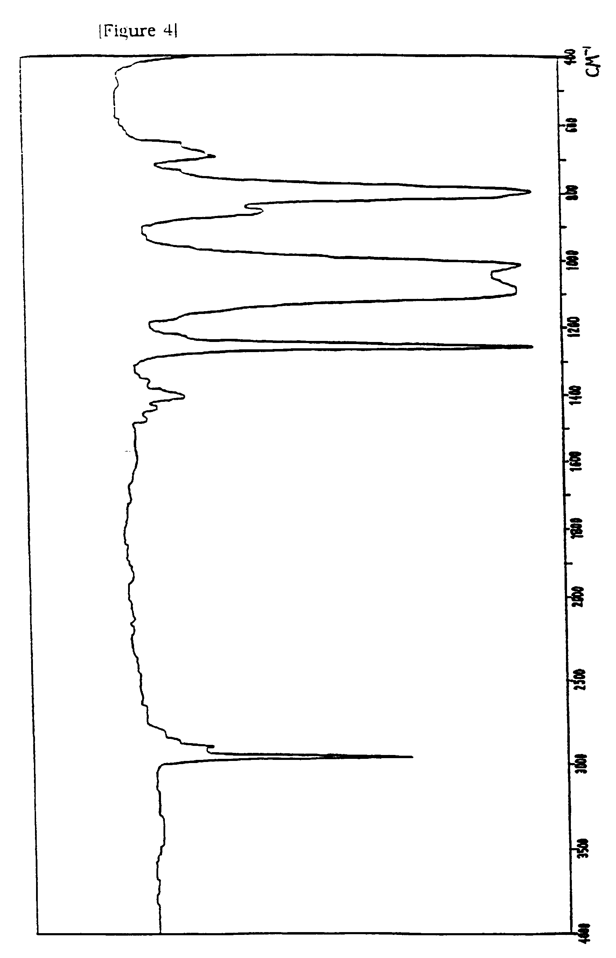

Figure 4: Figure 4 contains the infrared absorption spectrogram of the hydroxyl-terminated amino-containing organopolysiloxane prepared in Example 2.

## Claims

1. An organopolysiloxane with the following general formula 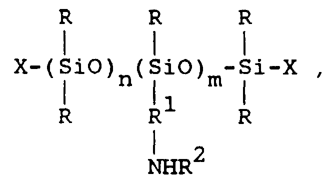 where each R is independently selected from monovalent hydrocarbon groups, R¹ is a divalent organic group having at least 2 carbon atoms, each R² is independently selected from monovalent hydrocarbon groups that are free of aliphatic unsaturation, X is selected from hydroxyl or alkenyl groups, and n and m are both integers with values of at least 1.

2. An organopolysiloxane as claimed in Claim 1 having the formula 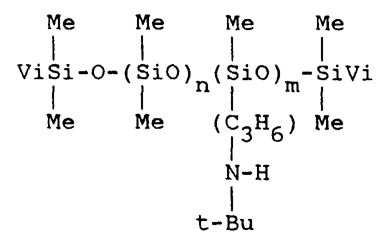 where Me is methyl, Vi is vinyl and t-Bu is tertiary-butyl.

3. An organopolysiloxane as claimed in Claim 1 having the formula 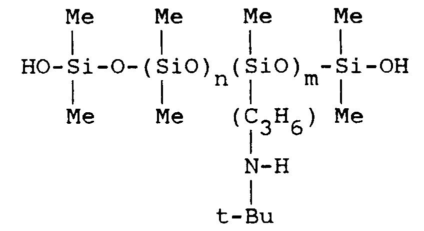 where Me is methyl, and t-Bu is tertiary-butyl.

4. A method for the preparation of the amino-containing organopolysiloxane as claimed in claim 1 wherein the method comprises equilibration polymerization of
(A) a diorganopolysiloxane comprised of units with the formula 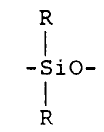 and
(B) a diorganopolysiloxane comprised of units with the formula 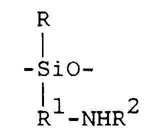 with the provision that if neither (A) or (B) contain an endblocking component that there is optionally
(C) an endblocking agent that contains hydroxyl or alkenyl groups; in the presence of
(D) a basic catalyst.

5. A method as claimed in Claim 4 wherein the basic catalyst is selected from the group consisting of an alkali hydroxide, an alkali silanolate and organometallic compounds.

6. A method as claimed in Claim 4 wherein there is additionally present a solvent.

7. A method as claimed in Claim 4 wherein (A) is octamethylcyclotetrasiloxane.

8. A method as claimed in Claim 4 wherein (B) is 1,3,5,7-tetramethyl-1,3,5,7-tetra[3-(N-tert-butylamino)propyl]cyclo-tetrasiloxane.

9. Use of the organopolysiloxane as claimed in any of claims 1 to 3 as a base polymer for low-temperature-curing silicone elastomers and room-temperature-curing silicone elastomers which resist yellowing.

## Patentansprüche

1. Organopolysiloxan mit der folgenden allgemeinen Formel: 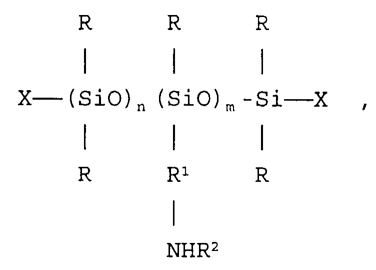 in der R jeweils unabhängig ausgewählt ist aus einwertigen Kohlenwasserstoffresten, R¹ einen zweiwertigen organischen Rest mit mindestens 2 Kohlenstoffatomen bezeichnet, R² jeweils unabhängig ausgewählt ist aus einwertigen Kohlenwasserstoffresten, die nicht aliphatisch ungesättigt sind, X ausgewählt ist aus Hydroxyl- oder Alkenylgruppen, und n und m beides ganze Zahlen mit Werten von mindestens 1 sind.

2. Organopolysiloxan nach Anspruch 1 mit der Formel 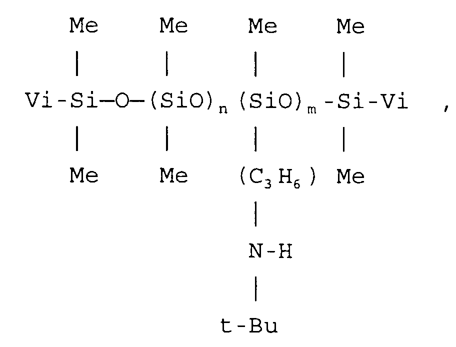 in der Me für Methyl steht, Vi für Vinyl steht und t-Bu für tertiär-Butyl steht.

3. Organopolysiloxan nach Anspruch 1 mit der Formel 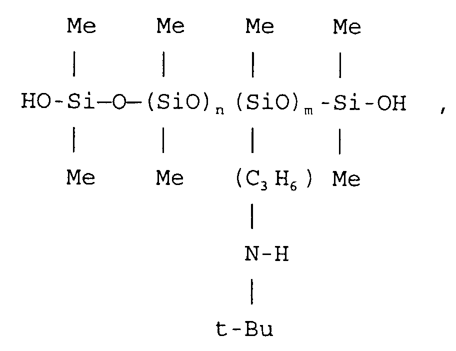 in der Me für Methyl steht und t-Bu für tertiär-Butyl steht.

4. Verfahren zur Herstellung der Aminogruppen enthaltenden Organopolysiloxane nach Anspruch 1, wobei das Verfahren umfaßt die äquilibrierende Polymerisation
(A) eines Diorganopolysiloxans, das Einheiten der Formel 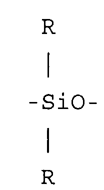 enthält, und
(B) eines Diorganopolysiloxans, das Einheiten der Formel 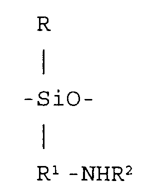 enthält,
mit der Maßgabe, daß wahlweise, wenn weder (A) noch (B) eine Endgruppen blockierende Komponente enthalten,
(C) ein Endgruppen blockierendes Mittel vorhanden ist, das Hydroxyl- oder Alkenylgruppen enthält; in Gegenwart
(D) eines basischen Katalysators.

5. Verfahren nach Anspruch 4, wobei der basische Katalysator ausgewählt ist aus der Gruppe, die aus Alkalihydroxiden, Alkalisilanolaten und Organometallverbindungen besteht.

6. Verfahren nach Anspruch 4, wobei zusätzlich ein Lösemittel vorhanden ist.

7. Verfahren nach Anspruch 4, wobei die Komponente (A) Octamethylcyclotetrasiloxan ist.

8. Verfahren nach Anspruch 4, wobei die Komponente (B) 1,3,5,7-Tetramethyl-1,3,5,7-tetra[3-(N-tert.-butylamino)propyl]-cyclotetrasiloxan ist.

9. Verwendung des Organopolysiloxans nach einem der Ansprüche 1 bis 3 als Grundpolymer für die Härtung von Siliconelastomeren bei niedriger Temperatur und von vergilbungsbeständigen Siliconelastomeren bei Raumtemperatur.

## Revendications

1. Organopolysiloxane ayant la formule générale suivante 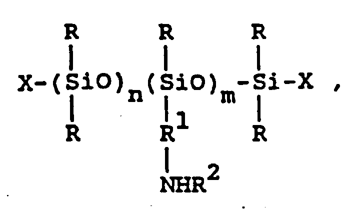 dans laquelle chaque R est indépendamment choisi parmi les groupes hydrocarbonés monovalents, R¹ est un groupe organique divalent ayant au moins 2 atomes de carbone, chaque R² est indépendamment choisi parmi les groupes hydrocarbonés monovalents qui sont exempts d'insaturation aliphatique, X est choisi parmi les groupes hydroxyle ou alcényles, et n et m sont tous les deux des nombres entiers avec des valeurs d'au moins 1.

2. Organopolysiloxane selon la revendication 1, ayant la formule 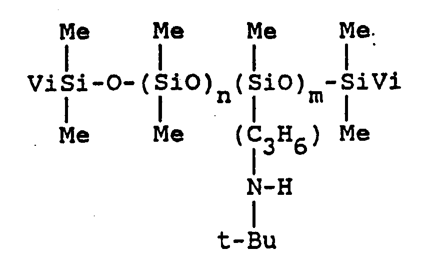 dans laquelle Me est le groupe méthyle, Vi est le groupe vinyle et t-Bu est le groupe tertiobutyle.

3. Organopolysiloxane selon la revendication 1, ayant la formule 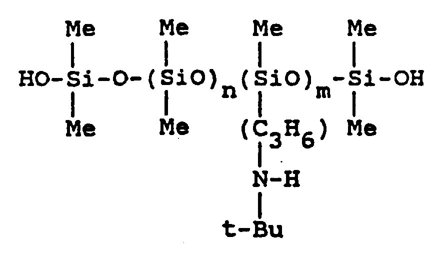 dans laquelle Me est le groupe méthyle et t-Bu est le groupe tertiobutyle.

4. Procédé pour la préparation de l'organopolysiloxane à groupe(s) amino selon la revendication 1, le procédé comprenant la polymérisation, avec équilibrage, de
(A) un diorganopolysiloxane composé d'unités ayant la formule 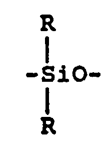 et de
(B) un diorganopolysiloxane composé d'unités ayant la formule 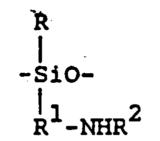 avec la condition que, si ni (A) ni (B) ne contiennent un constituant bloquant les extrémités, il y ait facultativement
(C) un agent bloquant les extrémités qui contient des groupes hydroxyle ou alcényles ; en présence de
(D) un catalyseur basique.

5. Procédé selon la revendication 4, dans lequel le catalyseur basique est choisi dans le groupe constitué par un hydroxyde de métal alcalin, un silanolate de métal alcalin et les composés organométalliques.

6. Procédé selon la revendication 4, dans lequel un solvant est en plus présent.

7. Procédé selon la revendication 4, dans lequel (A) est l'octaméthylcyclotétrasiloxane.

8. Procédé selon la revendication 4, dans lequel (B) est le 1,3,5,7-tétraméthyl-1,3,5,7-tétra[3-(N-tert-butylamino)propyl]cyclotétrasiloxane.

9. Utilisation de l'organopolysiloxane tel que revendiqué dans l'une quelconque des revendications 1 à 3, en tant que polymère de base pour des élastomères de silicone durcissant à basse température et des élastomères de silicone durcissant à température ambiante qui résistent au jaunissement.
